Europäisches Patentamt

European Patent Office

Office européen des brevets

(11) Publication number: **0 262 765 B1**

# EUROPEAN PATENT SPECIFICATION

(45) Date of publication of patent specification: **11.03.92** (51) Int. Cl.⁵: **G02B 6/38**

(21) Application number: **87306713.6**

(22) Date of filing: **29.07.87**

(54) **Fiber optic connector, tool for assembling fiber optic connector and method of assembling fiber optic connectors.**

(30) Priority: **04.08.86 US 892976**

(43) Date of publication of application:
**06.04.88 Bulletin 88/14**

(45) Publication of the grant of the patent:
**11.03.92 Bulletin 92/11**

(84) Designated Contracting States:
**DE FR GB IT SE**

(56) References cited:
**EP-A- 0 043 585**
**DE-A- 3 319 690**

**J.E.E. JOURNAL OF ELECTRONIC ENGINEER-**
**ING, vol. 20, no. 200, August 1983, pages**
**52-53, Tokyo, JP; M. TATEOM "More precise**
**connection needed for fiber optic cable"**

(73) Proprietor: **AMPHENOL CORPORATION**
**358 Hall Avenue P.O.Box 384**
**Wallingford Connecticut 06492-0384(US)**

(72) Inventor: **Margolin, Mark**
**6611 Lawndale**
**Lincolnwood Illinois 60645(US)**
Inventor: **Grois, Igor**
**7136 Keystone**
**Lincolnwood Illinois 60646(US)**
Inventor: **Moore, James Elton**
**2016 Chatham**
**Wheaton Illinois 60187(US)**

(74) Representative: **Abnett, Richard Charles**
**REDDIE & GROSE 16 Theobalds Road**
**London WC1X 8PL(GB)**

## Description

This invention relates to an improved fiber optic connector of simple structure having low connection losses when employed with fiber optic cable. The invention also relates to a tool for assembling such a fiber optic connector and a method of using the tool to assemble the connector. More specifically, this invention relates to such a connector for use with both single and multi-mode fibers, but the preferred embodiment finds special use with multi-mode fiber optic cables resulting in a very low loss connector of the type generally known as an SMA ceramic ferrule connector.

The use of optical fibers as a means for transmitting optical signals in the field of optical communications has been known for many years. When employed in such systems, it is necessary to interconnect different fibers within the system to complete the communications link. However, in such connections it is often found that not only are there transmission losses when the light is transmitted through the optical fibers, but extensive transmission losses also result from the actual fiber connections themselves. In order to eliminate or minimize such interconnection losses, fiber alignment must be achieved with accuracy on the order of microns, and at the same time the fibers have to closely abut in a manner such as to not damage the cleaved or polished fiber ends.

One prior approach to centering fibers or wave guides within aligned connectors is disclosed in U.S.Patent 4,440,469 to Schumaker. The device of Schumaker is an SMA-style optical waveguide connector, the type to which this invention is directed, and includes a tubular contact body having an axial passageway profiled for receiving a primary ferrule therein. The passageway is further profiled for retaining the primary ferrule at a rearward location, which ferrule receives an optical waveguide therethrough with a forward end segment of the waveguide extending forward from a forward end of the contact body. An alignment ferrule is provided and is mounted over the forward end of the contact body and received on a forward segment of the optical waveguide. The forward end of the primary ferrule and the inner profile of the contact body passageway are structured to interfit and define a region wherein adhesive material is inserted from the forward terminal end of the connector assembly. The adhesive is retained within this region by the alignment ferrule which fits over the forward segment of the optical waveguide.

Although initially aligning the fiber precisely, as the adhesive sets, some shrinkage of the adhesive occurs in the device of Schumaker, and it is not possible to achieve fine fiber alignment readily and reliably with such an arrangement. Moreover, the use of the adhesive complicates the assembly operation and requires long setting times and often, due to the setting of the adhesive, even if misalignment does not occur, changes in temperature will cause shrinkage or expansion of the adhesive ultimately resulting in creation of a gap and in the fiber ends being moved out of abutment with each other.

An alternative approach to solving these problems is disclosed in U.S. 4,487,474 which teaches the use of a pair of ceramic optical plugs having optical fibers extending coaxially therethrough which fit within a ceramic sleeve. A coupling nut serves to hold the two plugs together to effect the interconnection between the optical fibers. Although generally providing improved results over the adhesive employing prior art system described above, the connector of said patent includes disadvantages in that it is difficult to ensure that the two ceramic plugs are tightly held against each other.

One advantageous embodiment of a connector which avoids the above-discussed disadvantages is disclosed in our European Patent Application No. 86108829.2 which was filed 28 June, 1986 and which has inventors in common with those of this application. The connector described therein is generally satisfactory but it is complicated in construction and it is preferred for use with single mode fibers where the question of losses become even more critical than when multi-mode fibers are concerned.

A more preferred SMA type connector is described in a product brochure by Ofti dated November 28, 1984 discussing epoxy style-SMA ceramic series FO connectors. The connector described therein comprises typically a main body having a coupling nut attached thereto and in the front a ceramic ferrule receiving recess. In such a connector the cable is mounted within the connector in a conventional manner. The fiber is passed through a ceramic ferrule at the end, which ferrule is epoxied to the main housing in the recess, with the fiber being epoxied within the ferrule. The tip of the fiber extending from the ferrule is cut to a point where it extends beyond the end of the connector. Thereafter, the ceramic and the fiber are conventially ground and polished down in size to a desired length for both the ceramic as well as the fiber. While providing satisfactory results generally for use with both multi-mode and single mode fibers, the assembly of such a connector is difficult and further, ensuring the proper length for the ceramic also becomes difficult since it is a time consuming process and always not possible to maintain tolerances in the manufacture of the main metal body, and thereafter in the polishing operation, since variations in polishing techniques will affect the end face of the ceramic either in that it will be too short, too long or the end face will at an angle thereby creating an angular misalignment situation with respect to fibers being interconnected.

It is thus according to the invention that such a ceramic type connector is provided which is of simple construction and it is easily repeatable in terms of construction to provide connectors having extremely low losses.

## SUMMARY OF THE INVENTION

In accordance with the invention, there is provided a fibre optic connector of the type comprising a main body having a longitudinal passage extending therethrough and having two ends, a first end for attaching a fiber optic cable thereto and a second end for having a ceramic mating ferrule secured thereto, and said passage opening at each end and being coextensive with a passage extending through said ferrule, said second end being comprised of a recess in which is secured said mating ferrule, and said mating ferrule being constructed having the fiber of said fiber optic cable extending in a passage therethrough secured therein and terminating at the end of said ferrule, characterized in that said mating ferrule is arranged in press-fit engagement within said recess, said press-fit engagement being such that said ferrule does not abut against the bottom of said recess and extends beyond said main body by a fixed predetermined distance to be compatible for mating with other like connectors. Thus, the requirement for using epoxy to fix the ferrule to the body and later polishing down of the ferrule to achieve the predetermined length of the ferrule can be avoided.

In another aspect, the invention provides a tool for assembling a fiber optic connector of the type comprising a main body having a longitudinal passage extending therethrough, and having two ends, a first end for attaching a fiber optic cable thereto and a second end for having a mating ceramic ferrule secured thereto, and said passage opening at each end and being coextensive with a passageway extending through said ferrule; said second end comprising of a recess in which is to be secured said mating ferrule, and of such a size that said mating ferrule is to be secured by press-fit engagement, the tool comprising:

a first body member having a passage extending therethrough and configured for supporting said connector main body in a manner such that the ferrule-receiving second end extends beyond one end of the first body member by a predetermined distance;

a second body member receivable in part within the passage opening at said one end of said first body member, and having a passage including a first portion in which is received the second end of said connector main body which extends from said first body member, said first portion of said passage being of a length such that the second end of said connector main body terminates at a location adjacent the end of said first portion of said passage, said first portion being coextensive with a second portion of said passage which opens at a distal end of the second body member and said second portion, being of a size sufficient to permit a ferrule to be inserted therethrough, and said second body member being of predetermined length, such that when assembled with said first body member and a connector main body, a ferrule can be inserted therethrough from the said distal end into press-fit engagement in said connector main body recess without abutting with the connector body recess bottom and such that when said ferrule is flush at the end with the said distal end of said second body member, it extends from said connector main body by a predetermined desired amount; and

press means for pressing said ferrule into press-fit engagement with said connector main body in a manner such that the end of the ferrule terminates flush with said distal end of said second body member.

In still another aspect, the invention resides in a method of assembling the above-type connector by employing the tool of the invention, and comprises mounting a main body of a connector within the passage opening of the first body member of the tool, mounting the second body member over the main body of the connector and partly within the passage of the first body member of the tool. A ceramic ferrule is inserted at the free end of the second body member through the second portion of the passage thereof, and press means is employed to force ferrule into engagement with the recess of the connector main body to a point wherein the end of the ferrule is flushed with the free end of the second body member.

## BRIEF DESCRIPTION OF THE DRAWINGS

A more complete understanding of the foregoing and other features and advantages of the present invention can be obtained from the following detailed description taken in conjunction with the accompanying drawings in which:

figure 1 is a side cross-sectional view of the connector in accordance with the invention showing all the parts thereof;

Figures 2 and 3 are side cross-sectional views of the tool of the invention shown with a connector to be assembled therein and showing the steps of assembly in accordance with the method of the invention.

## DETAILED DISCUSSION OF THE INVENTION

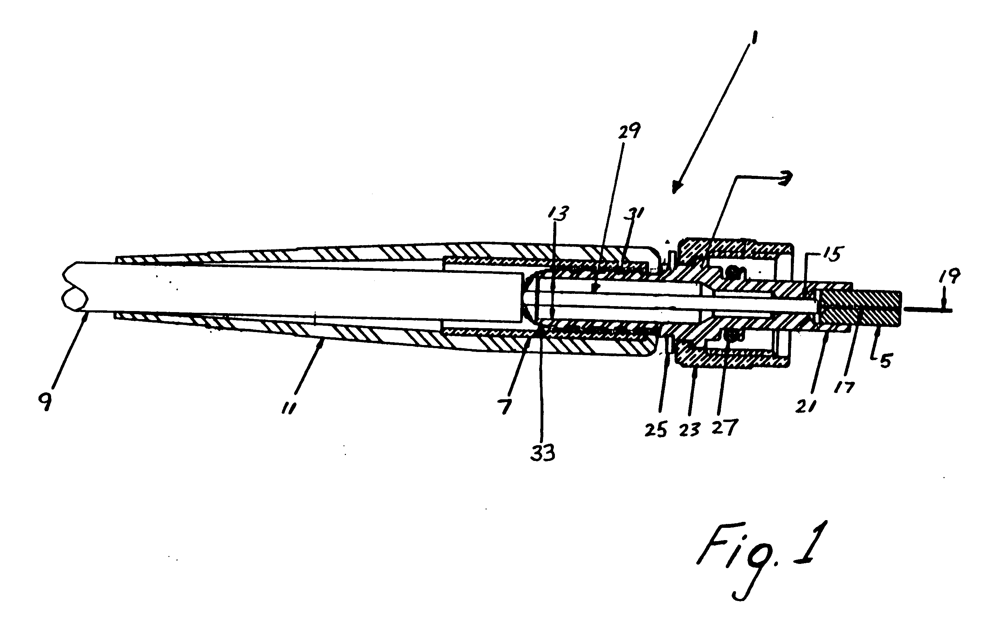

In Figure 1 there is shown an improved connector in accordance with the invention. The connector 1 comprises a main body 3 typically made of metal or other like material as will be readily apparent to those of ordinary skill in the art. The main body includes a first passage portion 13 of a predetermined width which progressively tapers down towards the mating end of the connector and opens into a recess containing end 21. The recess of the recess containing end 21 is sufficiently small that a ceramic ferrule 5 is received therein in press-fit engagement, i.e. the interior diameter thereof is equal to or slightly less than that of the ceramic ferrule. The ceramic ferrule 5 is inserted into the recess portion 21 only a predetermined distance so that it projects therefrom by a desired amount.

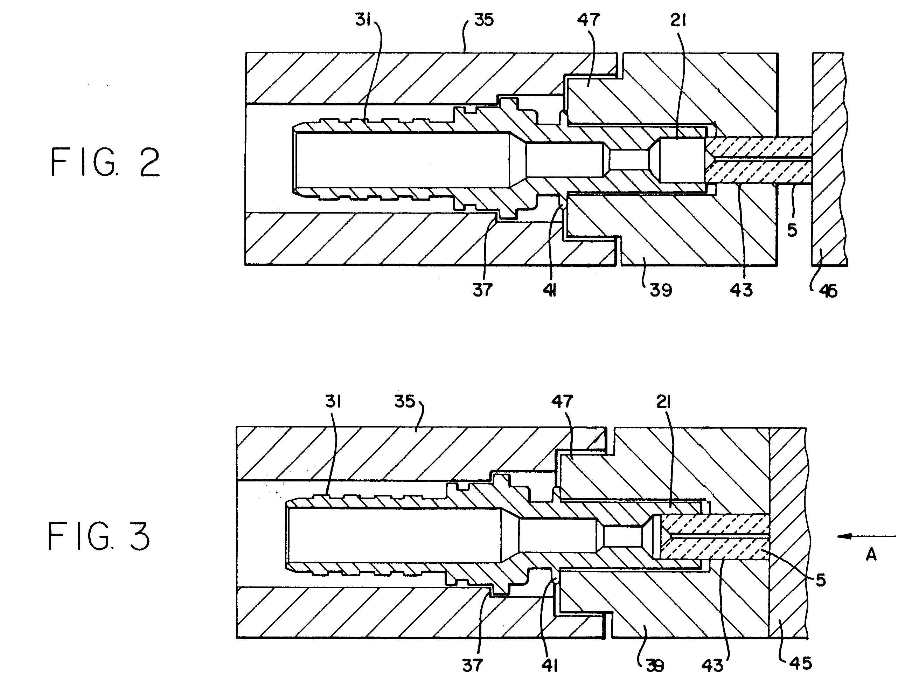

In practice, the connector 1 also includes a locking nut 23 which engages threads of a sleeve which mutually interconnects two like connectors. The locking nut 23 is received on the main connector body 3 and retained therein by a snap-lock ring 25. O-ring 27 serves to maintain a tight and clean construction when the sleeve which serves to align two connectors is received and engaged by the threaded lock nut 23. As shown in the drawings a fiber 17 stripped of its buffer layer is received and terminated flush with the end of the ferrule 5 by cutting off the excess portion 19 which projects therefrom. The fiber is held therein by means of epoxy. The buffer covered fiber 15 extends within the connector housing and the cable is secured to the connector housing by fanning out the strength layer 33, typically Kevlar™ fibers over the outer rear surface 31 of the connector body which includes ridges as more clearly shown in Figures 2 and 3. A crimpf sleeve 7 is received over the fibers and crimped thereon to retain the fiber optic cable 9 connected to the connector 1. A rubber of other like elastomeric material boot 11 serves to relieve tension on cable correction to the connector.

The tool and method of assembly of the connector in accordance with the invention is shown in Figures 2 and 3. The main connector body 3 is received within a first body member or housing 35 having a longitudinal passage extending therethrough. The connector body 3 is in abutment at a portion 37 within said housing 35 such that the recess end 21 projects a predetermined amount from the front end of the first housing 35. A second body member or housing 39 is received within the first housing 35. Projections 47 abut against a projection 41 of the connector so that the forward end of the connector body 3 extends a predetermined distance into the second housing 39. Accordingly, the housing 39 is sized such that when a ceramic ferrule 5 is inserted through an appropriately sized passage way 43 thereinto, when the ferrule 5 is pressed to be flush with the end of the housing 39, the distance the ferrule 5 projects beyond the end of the connector body 3 will have been predetermined and fixed for ease of repeatable assembly. A press member 45 serves to be forced in the direction of arrow A as shown in Figure 3 to arrive at the predetermined distance such that the ferrule 5 which is of slightly greater diameter than the recess in passage 21 is engaged by the connector body 3 in press-fit engagement.

Example

A connector in accordance with above-described embodiment was assembled. The connector body was stainless steel with the ferrule of ceramic material. A fiber optic cable was terminated with the connector by conventional crimping and epoxying of the fiber within the ferrule. The end of the fiber was polished by conventional polishing. Transmission of light through the connector to another connector was conducted. dB losses were measured and did not exceed 0.2dB.

Various modifications of the invention described illustratively hereinabove will be realized by those skilled in the art without departing from the scope of the invention as defined by the appended claims.

## Claims

1. A fiber optic connector (1) of the type comprising a main body (3) having a longitudinal passage (13) extending therethrough and having two ends, a first end for attaching a fiber optic cable (9) thereto and a second end for having a mating ceramic ferrule (5) secured thereto, and said passage (13) opening at each end and being coextensive with a passage extending through said ferrule (5), said second end being comprised of a recess (21) in which is secured said mating ferrule (5), and said mating ferrule (5) being constructed having the fiber (17) of said fiber optic cable (9) extending in a passage therethrough secured therein and terminating at the end of said ferrule (5), characterized in that said mating ferrule (5) is arranged in press-fit engagement within said recess (21), said press-fit engagement being such that said ferrule does not abut against the bottom of said recess and extends beyond said main body (3) by a fixed predetermined distance to be compatible for mating with other like connectors.

2. A connector as in claim 1 wherein said main body (3) is made of metal.

3. A connector as in claim 1 wherein said recess has a diameter of a size equal to or slightly less than that of the ferrule (5).

4. A tool for assembling a fiber optic connector (1) of the type comprising a main body (3) having a longitudinal passage (13) extending therethrough, and having two ends, a first end for attaching a fiber optic cable (9) thereto and a second end for having a mating ceramic ferrule (5) secured thereto, and said passage (13) opening at each end and being coextensive with a passageway extending through said ferrule (5); said second end comprising a recess (21) in which is to be secured said mating ferrule (5), and of such a size that said mating ferrule (5) is to be secured by press-fit engagement, the tool comprising:

a first body member (35) having a passage extending therethrough and configured for supporting said connector main body (3) in a manner such that the ferrule-receiving second end (21) extends beyond one end of the first body member (35) by a predetermined distance;

a second body member (39) receivable in part within the passage opening at said one end of said first body member (35), and having a passage including a first portion in which is received the second end of said connector main body (3) wich extends from said first body member (35), said first portion of said passage being of a length such that the second end of said connector main body (3) terminates at a location adjacent the end of said first portion of said passage, said first portion being coextensive with a second portion (43) of said passage which opens at a distal end of the second body member (39) and said second portion (43), being of a size sufficient to permit a ferrule (5) to be inserted therethrough, and said second body member (39) being of predetermined length, such that when assembled with said first body member (35) and a connector main body (3), a ferrule can be inserted therethrough from the said distal end into press-fit engagement in said connector main body recess (21) without abutting with the connector body recess bottom and such that when said ferrule (5) is flush at the end with the said distal end of said second body member (39), it extends from said connector main body (3) by a predetermined desired amount; and

press means (45) for pressing said ferrule (5) into press-fit engagement with said connector main body (3) in a manner such that the end of the ferrule terminates flush with said distal end of said second body member (39).

5. A method of assembling the connector of claim 1 comprising a main body (3) and a ceramic ferrule (5) for being press-fit engaged to said main body (3), comprising using the tool of claim 4.

**Revendications**

1. Un connecteur (1) à fibre optique du type comprenant un corps principal (3) comportant un passage longitudinal (13) qui le traverse et comporte deux extrémités, une première extrémité pour y attacher un câble (9) à fibre optique et une deuxième extrémité prévue pour y fixer un manchon d'assemblage (5) en céramique, et ledit passage (13) étant ouvert à chaque extrémité et étant en coextension avec un passage traversant ledit manchon (5), ladite deuxième extrémité comprenant un évidement (21) dans lequel est fixé ledit manchon d'assemblage (5), et ledit manchon d'assemblage (5) étant d'une structure telle que la fibre (17) dudit câble (9) à fibre optique s'étend dans un passage qui le traverse et y est fixée et se termine à l'extrémité dudit manchon (5), caractérisé en ce que ledit manchon d'assemblage (5) est disposé en ajustage serré à l'intérieur dudit évidement (21), ledit ajustage serré étant tel que ledit manchon ne vient pas en butée contre le fond dudit évidement et s'étend au-delà dudit corps principal (3) d'une distance fixe prédéterminée pour être compatible pour un assemblage avec d'autres connecteurs similaires.

2. Un connecteur selon la revendication 1 dans lequel ledit corps principal (3) est en métal.

3. Un connecteur selon la revendication 1 dans lequel ledit évidement est d'un diamètre égal ou un peu inférieur, en dimension, à celui du manchon (5).

4. Un outil de montage d'un connecteur (1) à fibre optique du type comprenant un corps principal (3) comportant un passage longitudinal (13) qui le traverse et comporte deux extrémités, une première extrémité pour y attacher un câble (9) à fibre optique et une deuxième extrémité prévue pour y fixer un manchon d'assemblage (5) en céramique, et ledit passage (13) étant ouvert à chaque extrémité et étant en coextension avec un passage traversant ledit manchon (5); ladite deuxième extrémité comprenant un évidement (21) dans lequel doit être fixé ledit manchon (5) et étant d'une dimension telle que ledit manchon d'assemblage (5) doit être fixé par ajustage serré, l'outil comprenant:

un premier élément (35) de corps comportant un passage qui le traverse et configuré pour supporter ledit corps principal (3) de connecteur d'une manière telle que la deuxième extrémité (21) recevant le manchon s'étend d'une distance prédéterminée au-delà d'une extrémité du premier élément (35) de corps;

un deuxième élément (39) de corps qui peut être reçu en partie à l'intérieur de l'ouverture de passage à ladite première extrémité dudit premier élément (35) de corps et comportant un passage incluant une première partie dans laquelle est reçue la deuxième extrémité dudit corps principal (3) de connecteur qui s'étend depuis ledit premier élément (35) de corps, ladite première partie dudit passage étant d'une longueur telle que la deuxième extrémité dudit corps principal (3) de connecteur se termine à un emplacement adjacent à l'extrémité de ladite première partie dudit passage, ladite première partie étant en coextension avec une deuxième partie (43) dudit passage qui s'ouvre à une extrémité distale du deuxième élément (39) de corps, et ladite deuxième partie (43) étant d'une dimension suffisante pour permettre à un manchon d'être inséré à travers elle, et ledit deuxième élément (39) de corps étant d'une longueur prédéterminée telle que, lorsqu'il est assemblé avec ledit premier élément (35) de corps et un corps principal (3) de connecteur, un manchon peut être inséré à travers lui depuis ladite extrémité distale en ajustage serré dans ledit évidement (21) de corps principal de connecteur sans venir en butée avec le fond de l'évidement du corps de connecteur et d'une manière telle que, lorsque ledit manchon (5) affleure à l'extrémité de ladite extrémité distale dudit deuxième élément (39) de corps, il s'étend d'une quantité prédéterminée souhaitée à partir dudit corps principal (3) de connecteur; et

des moyens de presse (45) pour presser ledit manchon (5) en ajustage serré avec le corps principal (3) de connecteur d'une manière telle que l'extrémité du manchon se termine en affleurement avec ladite extrémité distale dudit deuxième élément (39) de corps.

5. Un procédé de montage du connecteur selon la revendication 1 comprenant un corps principal (3) et un manchon en céramique (5) en vue d'un ajustage serré sur ledit corps principal (3) comprenant l'utilisation de l'outil selon la revendication 4.

**Patentansprüche**

1. Faseroptischer Verbinder (1) der Art, die einen Hauptkörper (3) umfaßt, der eine longitudinale Passage (13) aufweist, die sich durch ihn erstreckt, und zwei Enden aufweist, ein erstes Ende, um daran ein Faseroptikkabel (9) anzubringen, und ein zweites Ende, um daran eine keramische Einpaßendhülse (5) zu befestigen, und wobei die Passage (13) an jedem Ende offen ist und ausdehnungsgleich mit einer sich durch die Endhülse (5) erstreckenden Passage ist, wobei das zweite Ende eine Ausnehmung (21) umfaßt, in der die Einpaßendhülse (5) befestigt ist, und wobei die Einpaßendhülse (5) so konstruiert ist, daß die sich in einer Passage durch sie erstreckende Faser (17) des Faseroptikkabels (9) darin befestigt ist und am Ende der Endhülse (5) endet, dadurch gekennzeichnet, daß die Einpaßendhülse (5) im Preßsitzeinsatz innerhalb der Ausnehmung (21) angeordnet ist, wobei der Preßsitzeinsatz so ist, daß die Endhülse nicht gegen den Boden der Ausnehmung stößt und sich über eine vorbestimmte Distanz außerhalb des Hauptkörpers (3) erstreckt, um für eine Passung mit anderen ähnlichen Verbindern kompatibel zu sein.

2. Verbinder nach Anspruch 1, in welchem der Hauptkörper (3) aus Metall hergestellt ist.

3. Verbinder nach Anspruch 1, in welchem die Ausnehmung einen Durchmesser einer Abmessung gleich oder geringfügig geringer als den der Endhülse (5) aufweist.

4. Gerät zur Zusammensetzung eines Faseroptikverbinders (1) der Art, die einen Hauptkörper (3) umfaßt, der eine longitudinale Passage (13) aufweist, die sich durch ihn erstreckt, und zwei Enden aufweist, ein erstes Ende, um daran ein Faseroptikkabel (9) anzubringen, und eine zweites Ende, um daran eine keramische Einpaßendhülse (5) zu befestigen, und wobei die Passage (13) an jedem Ende offen ist und ausdehnungsgleich mit einer sich durch die Endhülse (5) erstreckenden Passage ist; wobei das zweite Ende eine Ausnehmung (21) umfaßt, in der die Einpaßendhülse (5) zu befestigen ist und die eine solche Abmessung aufweist, daß die Einpaßendhülse (5) durch Preßsitzeinsatz zu befestigen ist, welches Gerät aufweist: ein erstes Körperteil (35), das eine sich durch es erstreckende Passage aufweist und dazu ausgelegt ist, den Verbinderhauptkörper (3) in einer solchen Weise zu halten,

daß sich das die Endhülse aufnehmende zweite Ende (21) um eine vorbestimmte Distanz über ein Ende des ersten Körperteils (35) hinaus erstreckt;

ein zweites Körperteil (39), das teilweise innerhalb der an diesem einen Ende des ersten Körperteils (35) offenen Passage aufnehmbar ist und eine Passage aufweist, die einen ersten Abschnitt einschließt, in dem das zweite Ende des Verbinderhauptkörpers (3) aufgenommen ist, der sich vom ersten Körperteil (35) erstreckt, wobei der erste Abschnitt dieser Passage von einer solchen Länge ist, daß das zweite Ende des Verbinderhauptkörpers (3) an einer Stelle angrenzend an das Ende des ersten Abschnitts der Passage abschließt, wobei der erste Abschnitt mit einem zweiten Abschnitt (43) dieser Passage ausdehnungsgleich ist, der an einem distalen Ende des zweiten Körperteils (39) offen ist, und wobei der zweite Abschnitt (43) von einer Abmessung ist, die ausreicht, die Durchführung einer Endhülse (5) zu ermöglichen, und wobei das zweite Körperteil (39) von einer derart vorbestimmten Länge ist, daß, wenn es mit dem ersten Körperteil (35) und dem Verbinderhauptkörper (3) zusammengefügt ist, hierdurch eine Endhülse von diesem distalen Ende in einen Preßsitzeinsatz in die Verbinderhauptkörper-Ausnehmung (21) einführbar ist, ohne an den Boden der Verbinderhauptkörper-Ausnehmung anzustoßen, und derart, daß, wenn die Endhülse (5) am Ende bündig mit dem distalen Ende des zweiten Körperteils (39) ist, sie sich vom Verbinderhauptkörper (3) um ein vorbestimmtes gewünschtes Ausmaß erstreckt; und

eine Druckeinrichtung (45), die die Endhülse (5) in einer solchen Weise in Preßsitzpassung mit dem Verbinderhauptkörper (3) drückt, daß das Ende der Endhülse bündig mit dem distalen Ende des zweiten Körperteils (39) abschließt.

5. Verfahren zum Zusammensetzen des Verbinders nach Anspruch 1, der einen Hauptkörper (3) und eine keramische Endhülse (5) zur Preßsitzpassung an den Hauptkörper (3) aufweist, umfassend die Verwendung des Geräts nach Anspruch 4.

Fig. 1

FIG. 2

FIG. 3